# EUROPEAN PATENT SPECIFICATION

(11) **EP 0 744 928 B1**
(45) Date of publication and mention of the grant of the patent: **04.09.2002**
(21) Application number: 94916491.7
(22) Date of filing: 10.02.1994
(51) Int. Cl.: A61C 3/06, A61C 17/00

(54) **DISPOSABLE DENTAL CONTRA-ANGLE**
WEGWERFBARES DENTALES WINKELHANDSTÜCK
PIECE A MAIN A CONTRE-ANGLE JETABLE

(43) Date of publication of application: 04.12.1996
(73) Proprietor: YOUNG DENTAL MANUFACTURING COMPANY, Earth City, MO 63301 (US)
(72) Inventor: BAILEY, Ronald, L., St. Charles, MO 63301 (US)
(74) Representative: Weydert, Robert
(86) International application number: US9401551
(87) International publication number: WO95021584

(56) References cited:
- US-A- 2 451 192
- US-A- 3 740 853
- US-A- 5 020 994
- US-A- 5 040 978
- US-A- 5 160 263
- US-A- 5 224 859
- US-A- 5 252 067

## Description

### Field of Invention

This invention relates to dental or prophylaxis angles, and, in particular, to a disposable dental contra-angle.

### Background of the Invention

Dental angles carry dental bits such as prophy cups and brushes and burs. The angle enables dentists to reach more easily the various surfaces of a patient's teeth and thus facilitates the cleaning of the teeth. These angles generally include a body having a head thereon which has a major axis angled relative to the major axis of the body. The angle is commonly 90°. A drive gear and a driven gear are carried in the body in a meshing relationship. The driven gear carries a desired dental bit, such as a cleaning cup or a brush, which is to be used during the cleaning procedure. The body is slipped over the nose of a handpiece such as a Doriot type handpiece having a collet which receives the shaft of the drive gear. The collet holds the shaft, hence the angle, against axial movement. It also connects the drive gear to a motor, to rotate the drive gear, and thus the dental bit.

The use of disposable dental angles reduces the labor, cost, and risks of sterilization. A particularly effective such disposable dental angle is disclosed in Bailey, U.S. Patent No. 5,156,547 and in Kraenzle, US Patent No. 5,224,859 which discloses a one-piece drive member including a drive gear and a shaft.

Contra-angles are often used by dental personnel for getting to difficult spots. Contra-angles include a head which is angled at a greater angle than the usual 90° with respect to the axis of the handpiece. Typically the head is angled 10° to 30°, often 15° to 22°, from normal to the handpiece axis. In some designs, the body of the angle includes a 15°-22° angle formed in it; in others, an angled adapter is provided between the angle and the handpiece. To drive the dental bit secured to the head, contra-angles generally have two drive shafts. A first drive shaft extends for the bend to the Doriot to be grasped by the Doriot handpiece collet. It includes a gear at its forward end. A second drive shaft extends from the bend to the head. It includes a gear at its back end which meshes with the drive gear of the first shaft and a gear at its front end, which meshes with the gear at the end of the dental bit shaft to drive the dental bit.

A prior art contra-angle is disclosed in I. H. Blair, US Patent no. 2,451,192 on which the two-part form of independent claim 1 is based. This known contra-angle has an elbow member of tubular form forming a protective casing for a flexible drive shaft. A tubular housing is threaded to the elbow member and has two bores disposed at right angles to each other. A drive shaft having a tubular shank and a drive gear is disposed in one of the bores. The drive gear meshes with a driven gear disposed in the other bore.

Contra-angles are therefore complex, expensive, and made of expensive materials. No satisfactory disposable contra-angle is presently known.

### Summary of the Invention

The object of the invention is to provide a disposable, inexpensive, rugged dental contra-angle.

To achieve this object, there is provided in accordance with the present invention a dental contra-angle comprising: a body having a sleeve with an open rear end, a head, and a neck between the sleeve and the head, a first axial bore in the sleeve and neck, the first axial bore including a bend of from 10° to 30°, a second axial bore in the head, the first and second bores communicating with each other at an intersection and being at an angle with respect to each other; a drive means including a drive gear and a flexible shaft, the shaft extending rotatably from the open rear end of the sleeve through the first bore passed said bend; and a driven gear rotatably mounted in the head bore and operatively connected to the drive gear, the driven gear including means for retaining a dental bit, characterized in that the contra-angle is a plastic, disposable contra-angle, and said drive means is a one-piece drive member including said drive gear and said shaft, the shaft including a hollow portion extending to a point beyond the bend in the first axial bore.

Preferably, the hollow portion of the drive member shaft extends rearwardly from the drive gear. Also preferably, the drive member is inserted shaft first through the head, and the angle further includes cap means for closing the head as disclosed in US Patent no. 5,156,547. The one-piece drive member is preferably formed of polymeric plastics material.

In accordance with an advantageous embodiment of the invention, the first axial bore comprises a first portion at the rear end of the sleeve and a second portion at a front end of the neck, the bend of the first axial bore is between said first portion and said second portion, and the flexible shaft is rotatably supported solely by a bearing in the second portion of the first axial bore, so that the flexible shaft forms a substantial angle with respect to the axis of the first portion of the first axial bore when the contra-angle is removed from a dental handpiece. The flexible shaft is therefore flexed when the contra-angle is attached to a handpiece and relatively relaxed when the contra-angle is removed from the handpiece. Preferably, the drive gear.shaft is movable in the body between a resting position wherein the shaft is bent less than 10° and a flexed position wherein the shaft is bent more than 10°; the shaft remaining in the resting position until a time for use of the contra-angle. Also preferably, the.sleeve includes a slot into which the shaft extends in the resting position. The bend is preferably from 15° to 22°. The sleeve part of the body is preferably formed as a thin, flexible wall, the flexible shaft resting against the wall when the contra-angle is removed from a handpiece.

### Brief description of the Figures

FIG. 1 is a cross-sectional view of a disposable contra-angle having a single drive shaft in accordance with the present invention; and
FIG. 2 is a view of the contra-angle's drive shaft.

### Description of the Preferred Embodiment

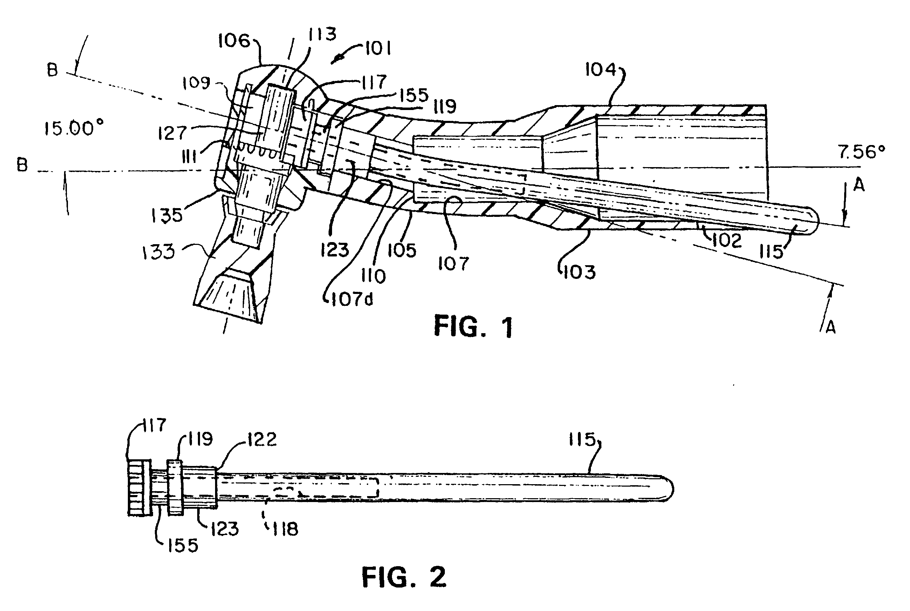

Referring to FIGS. 1-2, reference numeral 101 generally indicates a dental angle of the present invention. Angle 101 includes a one-piece body 103, a drive gear 117, a driven gear 127, and a cap 135. All the pieces are preferably molded of plastic so that angle 101 will be inexpensive to produce and thus disposable. This eliminates the need to sterilize angles and their associated bits between uses and thus eliminates any problem of cross-contamination between patients. It has been found that when dissimilar plastics are used for the body, cap,- and gears, the angle operates more smoothly. Thus, it is preferred that the body and cap be made from a hard plastic such as a polycarbonate resin available from General Electric Co. under the trademark LEXAN, and that the gears be made from a more flexible plastic, such as a self-lubricating acetal copolymer available from Celanese Corp. under the trademark CELCON.

Body 103 includes a sleeve portion 104, a neck 105, and a head 106. The wall thickness of the sleeve 104 is about 1mm (0.04"). A slot 102 at the rear, open end of the sleeve 104 is about 6.35 mm (0.250") long and about 2.5 mm (0.1" wide). The slot 102 is about twice as long as necessary to accommodate a standard positioning pin or finger on a standard Doriot type handpiece (not shown). The length of the slot 102 and the thinness of the plastic sleeve wall in which it is formed permit the sleeve to expand slightly when it is forced onto a Doriot handpiece. The forward end of the sleeve portion 104 tapers to the neck portion 105, which is a smaller diameter cylinder coaxial with the sleeve 104. Neck 105 defines an angle of about 15°, as at 110, between the head end of the neck and the rear end of the sleeve. Bore 107, within neck 105 has a matching angle.

The head portion 106 is formed as a cylinder at right angles to the neck 105, with the axis of the head 106 intersecting the axis of the neck 105. Body 103 and head 106 have axial bores 107 and 109, respectively.

Body bore 107 is formed with several diameters. In the sleeve portion 104, bore 107 is formed with the same diameter as the nose of a standard Doriot handpiece. It tapers in the transition between sleeve 104 and neck 105, to a smaller diameter portion in the neck 105, then steps to a yet smaller diameter portion 107d through the forward part of the neck 105. The portion 107d acts as a journal for the drive gear shaft, as described hereinafter.
Forward of the small diameter portion 107d, the bore 107 steps to a larger diameter portion, extending through the head portion 106 and forming an aperture 111 in the forward end of the head 106.

Head bore 109 is formed at a 90° angle with respect to body bore 107d. At the lower end of the head 106 head bore 109 forms a blind hole 113 centered with respect to the head bore 109. The internal construction of the head is preferably as described in U.S. Patent No. 5,156,547.

Drive gear 117 is formed integrally with a drive gear shaft 115. Drive shaft 115 includes a shoulder 119 spaced from the back of gear 117, defining a channel 155. Shaft 115 is stepped as indicated at 122 to define a single bearing surface 123 behind shoulder 119. The bearing surface 123 forms a smoothly rotatable fit with the forward portion of the neck portion 107d of the body bore 107. The remainder of the shaft 115 is of constant outer diameter.

To provide the shaft 115 with additional flexibility, the forward end of the shaft, from gear 117 to a point beyond the area of maximum flexion of the shaft is provided with an axial cavity 118. The constant diameter rearward portion of the shaft 115 has an outer diameter of 2.37 mm (0.0935"), and the cavity 118 has a diameter of 1.57 mm (0.0620") and a depth of 22.22 mm (0.875").

If shaft 115 were solid, it could bend to pass through angled bore 107d, but it would be less able to rotate about its axis effectively. When the shaft 115 is bent, it constantly has a compressed surface and a stretched surface opposite the compressed surface. When the shaft 115 rotates, the compressed and stretched surfaces are constantly changing. Thus, the surface of the shaft must be able to accommodate the constant change in stress placed upon it by the bend. The axial cavity 118 provides the shaft 115 with this pliability.

Drive gear 117, which is fixed to one end of a drive gear shaft 115, is received in body bore 107 through aperture 111. Shaft 115 extends beyond the end of body 103 when inserted therein to facilitate the capture of drive shaft 115 by chuck jaws in a handpiece, such as a collet in a Doriot handpiece, as shown in U.S. Patent No. 5,156,547.

Driven gear 127 is preferably identical with gear 27 of U.S. Patent No. 5,156,547. When inserted in head bore 109, driven gear 127 meshes with drive gear 117.to be driven thereby. Driven gear 127 receives a dental bit, such as a prophy cup 133.

The gears 117 and 127 preferably form a 90° cog gear system as in U.S. Patent No. 5,156,547.

A snap cap 135 is received in head bore 9 to lock gears 117 and 127 and their associated shafts in place in body 103. The snap cap 135 may preferably be identical with the cap 35 of U.S. Patent No. 5,156,547 and operates in the same way described therein to lock the parts together and form a barrier to ingress of matter into the body 103.

Contra-angle 101 is assembled in the same manner as angle 1 of U.S. Patent No. 5,156,547. The bearing 123 is lubricated. The drive gear 117 and its shaft 115 are inserted into body 103 shaft first. The driven gear is then inserted into head 106 and the assembly is closed with cap 135. When shaft 115 is inserted into body 103, it stays generally straight. As shown in FIG. 1, the rearward end of the shaft 115 naturally extends into the slot 102 in the skirt 104, thereby reducing further the amount of bend in the shaft 115 during shipment and storage of the angle 101 to about 7.5°. The shaft thus stays in a relatively relaxed position until it is ready for use, which can be a considerable time after assembly.

When the angle 101 is to be used, the shaft 115 is inserted into the collet of the handpiece, as is shown in FIG. 6 of U.S. Patent No. 5,156,547. Not until then does the shaft conform fully to the angle of neck 105. Because the shaft remains in its relaxed state until use, the shaft will not take a set. If the shaft were to be in its bent, flexed state from the time of assembly, the bend would tend to become set in the shaft. This would prevent contra-angle 101 from rotating smoothly and would greatly shorten the life of the shaft 115. By remaining in its relaxed, generally straight, position, the shaft remains more pliable, enabling it to take a constantly changing bend along its surface during use of the angle 101. The embodiment of FIGS. 1 and 2 has been run at 3,000 rpm for six hours before the shaft broke. This is far in excess of the time of use of the contra-angle on a single patient.

It will be seen that although the use of the shaft 115 in the preferred construction of contra-angle provides many advantages, a similar shaft with a hollow portion to provide flexibility could be used in modifications of other types of disposable prophylaxis angles to provide a disposable contra-angle.

Numerous variations, within the scope of the appended claims, will be apparent to those skilled in the art in light of the foregoing description and accompanying drawings.

## Claims

1. A dental contra-angle comprising:
a body (103) having a sleeve (104) with an open rear end, a head (106), and a neck (105) between the sleeve (104) and the head (106), a first axial bore (107) in the sleeve (104) and neck (105), the first axial bore (107) including a bend of from 10° to 30°, a second axial bore (109) in the head (106), the first and second bores (107, 109) communicating with each other at an intersection and being at an angle with respect to each other;
a drive means including a drive gear (117) and a flexible abaft (115), the shaft (115) extending rotatably from the open rear end of the alcove (104) through the first bore (107) passed said bend, and
a driven gear (127) rotatably mounted in the head bore (109) and operatively connected to the drive gear (117), the driven gear (127) including means for retaining a dental bit (133),
**characterized in that** the contra-angle is a plastic, disposable contra-angle, and said drive means is a one-piece drive member including said drive gear (117) and said shaft (115), the shaft (115) including a hollow portion (118) extending to a point beyond the bend in the first axial bore (107).

2. The contra-angle of claim 1, **characterized in that** the hollow shaft portion (118) extends rearwardly from the drive gear (117).

3. The contra-angle of claim 1 or 2, **characterized in that** the shaft (115) is molded of plastic.

4. The contra-angle of may one of claim 1 to 3, **characterized in that** the drive means is inserted shaft (115) first through an opening (111) in the head (106), the contra-angle further including cap means (135) for closing the opening (111).

5. The contra-angle of any one of claims 1 to 4, **characterized in that** the abaft (115) is flexible in the body (103) between a resting position wherein the shaft (115) is bent less than 10° and a flawed position wherein the shaft (115) is bent more than 10°; the shaft (115) remaining in the resting position until a time for use of the contra-angle.

6. The contra-angle of any one of claims 1 to 5, **characterized in that** the abaft (115) is flexible between a resting position and a flexed position, the alcove (104) including a slot (102) into which the shaft (115) extends in the resting position until a time for use of the contra-angle.

7. The contra-angle of any one of claims 1 to 6, **characterized in that** the bend is from 15° to 22°.

8. The contra-angle of any one of claims 1 to 7, **characterized in that** the first axial bore (107) comprises a first portion at the rear end of the alcove (104) and a second portion at a front end of the nook (105), maid bend of said first axial bore (107) being between said first portion and said second portion and that the flexible shaft (115) is rotatably supported solely by a bearing (123) in the second portion of said first axial bore (107).

9. The contra-angle of claim 1, **characterized by** comprising means for causing said flexible shaft (115) to be substantially coaxial with said sleeve (104) at said open rear end of said alcove (104) when said contra-angle is attached to a dental handpiece and for causing said flexible shaft (115) to form a substantial angle with respect to the axis of said sleeve (104) at said open rear end of said sleeve (104) when said contra-angle is removed from said handpiece, said means including said open rear end of said sleeve (104) being of sufficiently large diameter that said flexible shaft (115) is flexed when said contra-angle is attached to said handpiece and relatively relaxed when said contra-angle is removed from said handpiece.

10. The contra-angle of claim 9, **characterized in that** the sleeve (104) of the body (103) is formed as a thin, flexible wall, the flexible shaft (115) resting against the wall when the contra-angle is removed from said handpiece.

## Patentansprüche

1. Zahnmedizinischer Gegenwinkel mit:
einem Körper (103), mit einer Hülse (104), die ein offenes, hinteres Ende hat, einem Kopf (106), und einem Hals (105) zwischen der Hülse (104) und dem Kopf (106), einer ersten Axialbohrung (107) in der Hülse (104) und dem Hals (105), wobei die erste Axialbohrung (107) einen Knick von 10° bis 30° aufweist, einer zweiten Axialbohrung (109) in dem Kopf (106), wobei die erste und die zweite Bohrungen (107, 109) an einer Schnittstelle miteinander in Verbindung und in einem Winkel in Bezug aufeinander angeordnet sind;
einer Antriebseinrichtung mit einem Antriebszahnrad (117) und einer biegsamen Welle (115), wobei die Welle (115) sich drehbar vom offenen, hinteren Ende der Hülse (104) durch die erste Bohrung (107) über die Krümmung hinaus erstreckt; und
einem getriebenenen Zahnrad (127), das in der Kopfbohrung (109) drehbar gelagert ist und getrieblich verbunden ist mit dem Antriebszahnrad (117), wobei das getriebene Zahnrad (127) mit Mitteln versehen ist zum Festhalten eines zahnmedizinischen Bohrers (133),
**dadurch gekennzeichnet, dass** der Gegenwinkel ein wegwerfbarer Kunststoffgegenwinkel ist, und die Antriebseinrichtung ein einteiliges Antriebsteil ist, welches das Antriebszahnrad (117) und die Welle (115) umfasst, wobei die Welle (115) einen hohlen Teil (118) aufweist, der sich bis zu einer Stelle jenseits der Krümmung in der ersten Axialbohrung (107) erstreckt.

2. Gegenwinkel nach Anspruch 1, **dadurch gekennzeichnet, dass** der hohle Wellenteil (118) vom Antriebszahnrad (117) nach hinten ragt.

3. Gegenwinkel nach Anspruch 1 oder 2, **dadurch gekennzeichnet, dass** die Welle (115) aus gegossenem Kunststoff besteht.

4. Gegenwinkel nach einem der Ansprüche 1 bis 3, **dadurch gekennzeichnet, dass** die Antriebseinrichtung mit der Welle (115) voran durch eine Öffnung (111) in dem Kopf (106) eingesetzt ist, und der Gegenwinkel des Weiteren eine Kappe (135) aufweist zum Verschliessen der Öffnung (111).

5. Gegenwinkel nach einem der Ansprüche 1 bis 4, **dadurch gekennzeichnet, dass** die Welle (115) in dem Körper (103) biegsam ist zwischen einer Ruhestellung in welcher die Welle (115) weniger als 10° gebogen ist und einer Biegestellung in welcher die Welle (115) mehr als 10° gebogen ist, wobei die Welle (115) in der Ruhestellung verbleibt bis der Gegenwinkel eingesetzt wird.

6. Gegenwinkel nach einem der Ansprüche 1 bis 5, **dadurch gekennzeichnet, dass** die Welle (115) biegsam ist zwischen einer Ruhestellung und einer Biegestellung, wobei die Hülse (104) einen Schlitz (102) aufweist durch den die Welle (115) in der Ruhestellung ragt bis der Gegenwinkel eingesetzt wird.

7. Gegenwinkel nach einem der Ansprüche 1 bis 6, **dadurch gekennzeichnet, dass** der Knick 15° bis 22° beträgt.

8. Gegenwinkel nach einem der Ansprüche 1 bis 7, **dadurch gekennzeichnet, dass** die erste Axialbohrung (107) einen ersten Teil aufweist am hinteren Ende der Hülse (104) und einen zweiten Teil an einem vorderen Ende des Halses (105) aufweist, wobei der Knick der ersten Axialbohrung (107) sich zwischen dem ersten Teil und dem zweiten Teil befindet und wobei die biegsame Welle (115) nur durch ein Lager (123) in dem zweiten Teil der ersten Axialbohrung (107) drehbar gelagert ist.

9. Gegenwinkel nach Anspruch 1, **gekennzeichnet durch** Mittel um zu bewirken, dass die biegsame Welle (115) im Wesentlichen koaxial zu der Hülse (104) an dem offenen, hinteren Ende der Hülse (104) ist wenn der Gegenwinkel an einem zahnmedizinischen Handstück befestigt ist und um zu bewirken, dass die biegsame Welle (115) einen wesentlichen Winkel bildet in Bezug auf die Achse der Hülse (104) am offenen, hinteren Ende der Hülse (104) wenn der Gegenwinkel von dem Handstück entfernt ist, wobei dieses Mittel das offene, hintere Ende der Hülse (104) mit einem ausreichend grossen Durchmesser umfasst, damit die biegsame Welle (115) gebogen ist wenn der Gegenwinkel an dem Handstück befestigt ist und relativ entspannt ist wenn der Gegenwinkel vom Handstück entfernt ist.

10. Gegenwinkel nach Anspruch 9, **dadurch gekennzeichnet, dass** die Hülse (104) des Körpers (103) als dünne, biegsame Wand ausgeführt ist, wobei die biegsame Welle (115) an der Wand anliegt wenn der Gegenwinkel von dem Handstück entfernt ist.

## Revendications

1. Contre-angle dentaire comportant:
un corps (103) ayant un manchon (104) avec une extrémité arrière ouverte, une partie rétrécie (105) entre le manchon (104) et la tête (106), un premier alésage axial (107) formé dans le manchon (104) et la partie rétrécie (105), le premier alésage (107) incluant un pliage de 10° à 30°, un second alésage axial (109) formé dans la tête (106), le premier et le second alésage (107, 109) communiquant l'un avec l'autre en une intersection et formant un angle l'un par rapport à l'autre ;
un moyen d'entraînement comportant une roue d'entraînement dentée (117) et un arbre flexible (115), l'arbre (115) s'étendant de façon rotative de l'extrémité arrière ouverte du manchon (104) par le premier alésage (107) au-delà du pliage ; et
une roue entraînée dentée (127) montée à rotation dans l'alésage (109) de la tête et connectée à la roue d'entraînement (117) en vue d'être mise en marche par celle-ci, la roue entraînée (127) incluant des moyens pour retenir une fraise dentaire (133),
**caractérisé en ce que** le contre-angle est un contre-angle jetable en matière plastique, et le moyen d'entraînement est un élément d'entraînement en une seule pièce incluant la roue d'entraînement (117) et l'arbre (115), l'arbre (115) ayant une partie creuse (118) s'étendant jusqu'à un point au-delà du pliage du premier alésage axial (107).

2. Contre-angle selon la revendication 1, **caractérisé en ce que** la partie creuse (118) de l'arbre s'étend vers l'arrière de la roue d'entraînement (117).

3. Contre-angle selon la revendication 1 ou 2, **caractérisé en ce que** l'arbre (115) est en matière plastique moulée.

4. Contre-angle selon l'une quelconque des revendications 1 à 3, **caractérisé en ce que** le moyen d'entraînement est introduit avec l'arbre (115) d'abord par une ouverture (111) formée dans la tête (106), le contre-angle ayant en outre un moyen formant chapeau (135) pour fermer ladite ouverture (111).

5. Contre-angle selon l'une quelconque des revendications 1 à 4, **caractérisé en ce que** l'arbre (115) est flexible dans le corps (103) entre une position de repos dans laquelle l'arbre (115) est plié moins de 10° et une position fléchie dans laquelle l'arbre (115) est plié plus de 10° ; l'arbre (115) restant dans la position de repos jusqu'au moment d'utilisation du contre-angle.

6. Contre-angle selon l'une quelconque des revendications 1 à 5, **caractérisé en ce que** l'arbre (115) est flexible entre une position de repos et une position fléchie, le manchon (104) ayant une rainure (102) dans laquelle l'arbre (115) s'étend dans sa position de repos jusqu'au moment d'utilisation du contre-angle.

7. Contre-angle selon l'une quelconque des revendications 1 à 6, **caractérisé en ce que** le pliage est de l'ordre de 15° à 22°.

8. Contre-angle selon l'une quelconque des revendications 1 à 7, **caractérisé en ce que** le premier alésage axial (107) comporte une première partie à l'extrémité arrière du manchon (104) et une seconde partie à une extrémité avant de la partie rétrécie (105), le pliage du premier alésage axial (107) se trouvant entre ladite première partie et ladite seconde partie et **en ce que** l'arbre flexible (115) est supporté pour rotation seulement par un palier (123) prévu dans la seconde partie du premier alésage axial (107).

9. Contre-angle selon la revendication 1, **caractérisé en ce qu'**il comporte un moyen pour faire que l'arbre flexible (115) soit sensiblement coaxial avec ledit manchon (104) à l'extrémité ouverte arrière de ce manchon (104) lorsque le contre-angle est attaché à une pièce à main dentaire et pour faire que l'arbre flexible (115) forme un angle substantiel par rapport à l'axe dudit manchon (104) à l'extrémité ouverte arrière du manchon (104) lorsque le contre-angle est enlevé de cette pièce à main, ce moyen incluant l'extrémité arrière ouverte du manchon (104) d'un diamètre suffisamment grand de sorte que l'arbre flexible (115) soit fléchi lorsque le contre-angle est attaché à ladite pièce à main et relativement relaxé lorsque le contre-angle est enlevé de ladite pièce à main.

10. Contre-angle selon la revendication 9, **caractérisé en ce que** le manchon (104) du corps (103) est formé par une mince paroi flexible, l'arbre flexible (115) restant en engagement avec cette paroi lorsque le contre-angle est enlevé de ladite pièce à main.
